# EUROPEAN PATENT SPECIFICATION

(11) **EP 3 368 303 B1**
(45) Date of publication and mention of the grant of the patent: **16.08.2023**
(21) Application number: 16804914.6
(22) Date of filing: 23.10.2016
(51) Int. Cl.: B32B 17/10, B32B 17/06, H05K 1/03

(54) **GLASS LAMINATES**
VERBUNDGLAS
STRATIFIÉS DE VERRE

(30) Priority: 30.10.2015 IN 4142MU2015
(43) Date of publication of application: 05.09.2018
(73) Proprietor: SP Advanced Engineering Materials PVT. Ltd., Fort Mumbai Maharashtra 400023 (IN)
(72) Inventor: MUKHERJI, Arindam, Thane-(W) Mumbai Maharashtra 400607 (IN)
(74) Representative: Barker Brettell LLP
(86) International application number: PCT/IN2016/050360
(87) International publication number: WO 2017/072789

(56) References cited:
- GB-A- 2 178 363
- JP-A- H07 126 044
- US-A- 3 520 750
- US-A- 3 546 064
- US-A- 3 558 422
- US-A- 3 703 425
- US-A- 5 219 630
- US-A1- 2011 070 451
- US-A1- 2013 180 769

## Description

### FIELD OF THE INVENTION

The present invention relates to a moulded laminated reinforced composite glass.

The present invention particularly relates to said moulded laminated reinforced composite glass which is mechanically strong composite of high optical quality and transparency.

The present invention is also related to a system for the production of said moulded laminated reinforced composite glass.

The present invention is also related to a process for the production of said moulded laminated reinforced composite glass, which is low cost, environment friendly, etc.

### BACKGROUND OF THE INVENTION

Composite structures are being increasingly used in a wide variety of applications due to their high specific strength and modulus. Even though use of composite structures can range from fields such as marine and automotive to skis and tennis rackets, their great strength-to-weight ratio makes the composites ideal for aerospace applications. Glass has been commonly used for windows in airplanes because of its hardness, chemical inertness, abrasion resistance and relatively low cost. However, glass is brittle, heavy, shatters upon impact and is difficult to form complex shapes. Light weight and mechanically strong alternatives are highly desirable. Optically transparent composite is a viable solution. Transparent composites can replace traditional heavy glass on the airplanes with light weight windows and windshields. Glass laminates can be used as windows and glazings in architectural and transportation applications, including automobiles, rolling stock and airplanes. As used herein, a glazing is a transparent or semi-transparent part of a wall or other structure. Common types of glazings that are used in architectural and automotive applications include clear and tinted glass, including laminated glass. Laminated glazings comprising opposing glass sheets separated by a plasticized poly (vinyl butyral) (PVB) sheet, for example, can be used as windows, windshields, or sunroofs. In certain applications, glass laminates having high mechanical strength and sound-attenuating properties are desirable in order to provide a safe barrier with reduced sound transmission from external sources. A key function of an interlayer within a laminated glass structure is to prevent or at least minimise dispersion of dangerous glass fragments should the glass break.

Films made from plasticised PVB are considered to be particularly suited for use as an interlayer in laminated glass products due to their ability to strongly adhere with glass, their transparency and their sound physical and mechanical properties over a broad range of temperatures.

However, there are several disadvantages to using plasticised PVB films as an interlayer:
- Films are relatively expensive.
- PVB films are also hygroscopic and must be handled under controlled atmospheric conditions to prevent excessive moisture uptake.
- Plasticised PVB film is often subject to blocking problems at the time of windup after film formation due to its very tacky surface. To prevent blocking, plasticised PVB films are typically provided with some form of parting means when stored or transported in the form of stacks of die-cut blanks or in the form of rolls. The use of PVB as an interlayer material therefore adds considerable expense to the final laminated glass product.
- PVB polymer itself is not particularly well suited to pigmentation or decoration. Polyvinylchloride (PVC) has been considered as a potential replacement for PVB as an interlayer material due to its following advantages:
- PVC is a commercial polymer that is readily available and relatively inexpensive.
- PVC can be easily calendered to a range of thicknesses, it can be plasticised to give a range of hardness values, it has suitable physical and mechanical properties for use as an interlayer and it can be pigmented or decorated to give a wide range of colours.
- PVC is not water sensitive and unlike PVB, does not require storage in a special controlled humidity environment.

However, the use of PVC in laminated glass structures has been limited due to the polymer having practically no inherent ability to adhere to glass. Attempts have been made to promote adhesion between glass and PVC within laminated glass structures. For instance, US 4,277,583 and US 6,180,246 discloses the use of organosilane compounds as adhesion promoters. Such compounds are typically coated on the surface of the PVC film or dispersed within the PVC film itself. US 4,600,627 disclose a laminated glass structure wherein an ethylene vinyl acetate (EVA) polymer is used to bond a PVC interlayer to the glass sheets. However, it has been reported that silane adhesion promoters are required to be used in conjunction with EVA in order to obtain adequate bond strength. US 3,388,034 disclose use of polyvinyl butyral sheeting as an interlayer material for binding glass to polycarbonate. But in such case it requires interlayer material for bonding glass to polycarbonate.

US 5,759,698 disclose a laminated glass having sheets of plate glass with a bonding layer intervening there between for integration. The bonding layer is formed of a resin composition comprising (A) a terpolymer of ethylene, vinyl acetate, and an acrylate and/or methacrylate monomer, (B) a terpolymer of ethylene, vinyl acetate, and maleic acid and/or maleic anhydride, (C) a terpolymer of ethylene, an acrylate and/or methacrylate monomer, and maleic acid and/or maleic anhydride or (D) an ionomer resin in the form of an ethylene-methacrylic acid copolymer with a metal ion binding molecule thereof as a thermosetting resin, an organic peroxide, and a silane coupling agent. The resin composition is thermoset between the glass sheets.

EP 1,524,301 discloses a transparent composite composition which comprises a transparent resin (a) and a glass filler (b) and in which the transparent resin has an Abbe number of not smaller than 45. The transparent resin is a cross linked acrylate resin derived from (meth)acrylate having two or more functional groups, in particular a (meth)acrylate having an alicyclic structure, as the main component, or a cured epoxy resin derived from an epoxy resin having two or more functional groups, such as an alicyclic epoxy resin or triglycidyl isocyanurate, as the main component.

US20130295357 discloses a glass laminate which comprises an external glass sheet, an internal glass sheet, and a polymer interlayer formed between the external glass sheet and the internal glass sheet. The external glass sheet can be a thin chemically-strengthened glass sheet or can be a non-chemically strengthened glass sheet, the polymer interlayer can have a thickness of less than 1.6 mm, and the internal glass sheet can be a non-chemically-strengthened glass sheet or a thin chemically strengthened glass sheet.

The glass produced by any of these existing methods is heavy and thin glass cannot be used in the manufacturing process.

Various attempts have been made to obtain transparent composites by adjusting the refractive indices of resins and fillers. The article "Manufacturing of Transparent Composites using

Vacuum Infusion Process" - Proceedings of the 4th Annual ISC Research Symposium ISCRS 2010 April 21, 2010, Rolla, Missouri discloses an optically transparent glass fibre reinforced polymer matrix composite by infusing a clear epoxy resin system of matching refractive index into a stacked glass fabric preform.

Further, the article "Influence of curing agents on gelation and exothermic behaviour of an unsaturated polyester resin" - Bull. Mater. Sci., Vol. 36, No. 7, December 2013, pp. 1217-1224, Indian Academy of Sciences, discloses effects of different ratio of initiator and promoter to the unsaturated polyester resin upon curing of the resin.

Thus, a transparent composite in which general purpose glass filler is used and which shows high light transmissivity in a wide wavelength range is desired.

US 4,241,140 disclose laminated safety glass with polyurethane film. The interlayer polyurethane sheet is prepared by casting polymerization. Then polyurethane sheet is laminated at a temperature of about 300°F (about 149°C) and pressure of about 200 pounds per square inch between two glasses. Although the adhesion promoters do initiate a bond between the glass and PVC or PBI but there are many practical problems associated with the effective use of such adhesion promoters. For example, additional manufacturing steps are often required in order to incorporate the adhesion promoters. Furthermore, achieving an appropriate bond between the PVC or EVA or PBI and the glass is subject to many complex variables such as surface energy of the film, stability of the interlayer coating, etc during lamination.

In view of vehicular applications, fuel economy is a function of vehicle weight. It is desirable, therefore, to reduce the weight of glazings for such applications without compromising strength and sound-attenuating properties. Desirable properties of such glazing should have sufficient strength to hold broken glass; sufficient adhesion to the glass to prevent or at least minimise dispersion of the broken glass; acceptable weather ability, etc. Normally, thin interlayer polymers glass lamination process is adapted so far. Normally, production process involves two steps. In the first step the interlayer is placed between two sheets of glass and the resulting sandwich type structure is heated as it passes through nip rollers that squeeze the glass sheets into contact with the softened interlayer. A further step involves the treatment of the laminate so formed in an autoclave to complete the bonding process. US 4,121,014 discloses laminated windows containing adjacent layers of polycarbonate and plasticized polyvinyl acetal using adhesive film as polyurethane or an epoxy resin. But in case of polycarbonate, it's not laminated to glass. Also high temperature and high pressure is required for lamination in such case.

A transparent composite is based on the concept of matching the refractive index of the glass fibre with that of resin. Refractive index of the matrix can be modified to match with that of the glass fibre by changing the degree of polymerization of the polymer matrix. Various processing factors such as the amount of initiator, cross-linker, curing temperature and time must be carefully controlled to obtain a given refractive index. Significant reduction in weight can only be brought in by increasing the volume portion of polymer composite and reducing glass volume portion. But in doing so, one may not have the desired strength to replace toughen glass. Hence to get over from above limitation, moulding laminated reinforced composite glass by using glass fabric and nano composite may be the only solution. In view of transparency, refractive index plays a major role in polymer composites composed of more than two phases. Hence, polymer matrix with its given refractive index has to match the refractive index of the glass fibre. The refractive index of the glass fibre depends on its chemical composition, thermal history and fibre diameter. The diameter of the glass fibres pulled from a crucible of constant geometry depends upon the glass flow rate through the nozzle and the velocity at which the fibres are drawn by a take up wheel. Annealing can also increase the refractive index of chilled glass and could be potentially useful in fabricating transparent composites. The thickness, tex of fibre involved and the free voids appeared while fibres are wet in liquid polymer. A proprietary thermoset epoxy and polyester resin has been developed by Atul Pvt. Ltd and Satyen Polymers Pvt. Ltd. The resin has a low viscosity which allows it to be utilized in various liquid composite manufacturing processes. Several concepts of transparent composite were reported in literature. Olson, J. R., Day, D. E., Stoffer, J. O., 1992, "Fabrication and mechanical properties of an optically transparent glass fibre/polymer matrix composite," Journal of Composite Materials, (Vol. 26, No. 8, pp. 1181-92) proposed transparent composite with glass reinforcements in thermoplastic Poly(methyl methacrylate) PMMA matrix. Kagawa, Y., Iba, H.,Tanaka, M., Sato, H., and Chang, T., 1998, "Fabrication and optical/thermal properties of glass particle-epoxy optically transparent composites," Acta Materialia, (Vol. 46, No. 1, pp. 265-271) manufactured mixing glass powder with the epoxy resin. Specialty rectangular glass ribbons were used as reinforcements by Chandrashekhara, K., Schuman, T., Sundararaman, S., Day, D., Velez, M., and Phan, N., 2008, "Manufacturing and performance evaluation of glass-ribbon reinforced transparent composites," SAMPE International Symposium, (53, pp. 1-12) studied multiple density glass fibres in a polymeric matrix.

The fact that the transparency of a composite comprising a transparent resin and transparent filler is inferior is presumably due to the difference in refractive index between the filler and resin, which causes diffused reflection of the light penetrating the resin.

During the last two decades, nano-particulates are utilized to improve the physical and mechanical properties of polymers and composites. Among the nano-particulates, carbon nanotubes and nano-clay have been widely studied. In particular, nanoclay is preferred in commercial applications over carbon nanotubes owing to its low-cost and abundance. CN 1718428 discloses a laminated nano-material plate prepared from mixing polyamide resin with non-metal nano-particles and dispersed to obtain resin adhesive and coated with glass fibre cloth. Indian Patent Application number 169/MUM/2010 discloses a lead free silica glass nano composite which comprises mainly silica, Na₂O, ZnO, B₂O₃ and also other oxides in relatively small proportion.

In addition to neat polymers, nano-clay is also used in fabrication of fibre reinforced composites. The reinforcement effect of nano-clay in rubbery polymers is due to the large deformations encountered before failure. During those deformations the clay platelets are most likely forced to align in the direction of the force and act as reinforcing elements. Low cost raw materials and fabrication process, comprising major portion of the final cost of the composite, are ideal. Manufacturing of quality parts using the vacuum infusion process is dependent on various parameters such as viscosity of the resin, permeability of the preform, location of resin inlet, and vacuum ports. Transparent composites will also have potential applications as backing material in transparent armour systems.

Attempts have been made to improve the rigidity, strength, thermal expansion coefficient, dimension stability, water absorbency and other various characteristics of resins by adding thereto various fillers, such as glass fibres and inorganic particles.

However, the transparency of composites resulting from addition of filler, such as a glass fibre or inorganic particles, to resins is inferior in most cases. Final product taught by the above prior art documents lack the desired bending strength and transparency in the final product if a composite retaining the good transparency of the corresponding resin can be obtained, it might be expected that the composite be useful in a very wide range, for example in the optical field. Accordingly, there is a long felt need to provide an improved transparent moulded laminated reinforced composite glass to overcome the said problems of the prior art, which has increased bending strength, scratch proof, light in weight. and a simple process of producing it.

### OBJECTS OF THE INVENTION

An object of the invention is to provide a moulded laminated reinforced composite glass, which is light weight, transparent and has high tensile strength, high flexural strength, high bending strength and load bearing capacity.

Another object of the invention is to provide said moulded laminated reinforced composite glass, which has more uniformity in properties and integrity.

Yet another object of the invention is to provide said moulded laminated reinforced composite glass, wherein the glass is safety compliant, durable and with reduced laceration potential in the event of a vehicular crash.

Still another object of the invention is to provide said moulded laminated reinforced composite glass, wherein said glass is scratch-proof, weather proof and improved ultra-violet resistant. An additional object of the invention is to provide systems for the production of said moulded laminated reinforced composite glass, wherein said system is efficient, simple and hassle free.

Another additional object of the invention is to provide processes for the production of said moulded laminated reinforced composite glass; wherein said processes yields product with improved high impact strength, which is highly scratch-proof, weather proof and improved ultra-violet resistance.

Yet another additional object of the invention is to provide processes for the production of said moulded laminated reinforced composite glass; wherein said processes incorporates bubble free nano composites so as to reduce degassing steps, thereby making processes efficient and economic.

Still another additional object of the invention is to provide product, simplified processes and systems for producing said product which overcomes the limitations of the art, and to achieve additional advantages, as apparent from the present description.

### BRIEF DESCRIPTION OF THE DRAWINGS

Figure 1 illustrates the system for manufacturing moulded laminated reinforced glass using resin transfer technique under gravity.
Figure 2 illustrates structural drawings of mould assembly.
Figure 3 illustrates the system for manufacturing moulded laminated reinforced glass.
Figure 4 illustrates structural drawings of spacer used for producing mould assembly.
Figure 5 illustrate mould assembly assembled with plate, spacer with glass.
Figure 6 illustrates mould assembly assembled with plate, spacer with glass and synthetic fabric.
Figure 7 illustrates the bi-directionally pre-tensioned synthetic fabric.

### DETAILED DESCRIPTION OF THE INVENTION

The present invention as described below, it is to be understood that this invention is not limited to particular embodiments, drawings, methodologies and materials described, as these may vary as per the person skilled in the art. It is also to be understood that the terminology used in the description is for the purpose of describing the particular embodiments only, and is not intended to limit the scope of the present invention.

Before the present invention is described, it is to be understood that unless defined otherwise, all technical and scientific terms used herein have the same meaning as commonly understood by one of ordinary skill in the art to which this invention belongs. Unless stated to the contrary, any use of the words such as "including," "containing," "comprising," "having" and the like, means "including without limitation" and shall not be construed to limit any general statement that it follows to the specific or similar items or matters immediately following it. Embodiments of the invention are not mutually exclusive, but may be implemented in various combinations. The described embodiments of the invention and the disclosed examples are given for the purpose of illustration rather than limitation of the invention as set forth in the appended claims. It is to be understood that the invention is defined by the scope of the appended claims.

It is also to be understood that the terms "a", "an", "the" and like are words for the sake of convenience and are not to be construed as limiting terms. Moreover, it will be understood that the illustrations are for the purpose of describing a particular exemplary embodiment of the invention and are not limited to the invention thereto.

The term "fibres" or "fibre" or "fabric" or "fabrics" are interchangeable and intend to cover single as well as plural fibre or fabric.

In many vehicular applications, fuel economy is a function of vehicle weight. It is desirable, therefore, to reduce the weight of glazings for such applications without compromising strength, sound-attenuating properties and weather ability. In this regard, it can be advantageous for a glass laminate to be mechanically robust with respect to external impact events such as attempted forced entry or contact with stones or hail, yet suitably dissipate energy (and fracture) as a result of internal impact events such as contact with an occupant or any collision. Further, governmental regulations are demanding higher fuel mileage and lower carbon dioxide emissions for road vehicles. Thus, there has been an increased effort to reduce the weight of these vehicles while maintaining current governmental and industry safety standards. Non-glass window materials, such as polycarbonate, have been developed, which reduce vehicle weight but do not offer appropriate resistance to environmental, debris, and other concerns. Also, degree of inclination has direct impact on thickness variations and curing mechanisms of the resin. More inclined charging of resin results in bulging of resin at the centre part of the mould and uncontrolled process due to leakage problem. Higher inclination leads to faster curing and high exothermic reaction.

The term nano composite and nano composite liquid system are interchangeable.

The nano composite liquid system comprises polyester resin, a curing system comprising 2 % (by wt. of the resin) cobalt octoate and 1.5% % (by wt. of the resin) methyl ethyl ketone peroxide, nano particles comprising 0.1 % (by wt. of the resin) carbon nanotubes and 0.3 % (by wt. of the resin) nano clay, and extenders comprising 5 % (by wt. of the resin) epoxy and 3 % (by wt. of the resin) vinyl acetate.

The glass is ordinary floating glass.

Preferably, the glass surface is further treated with coupling agent.

Preferably, the thermosetting resin used is selected from unsaturated polyester, epoxy, and phenol formaldehyde.

The nano particle is selected from carbon nanotubes (CNT), nano clay like MMT clay, nano silica, and /or nano zeolite.

The glass surface is treated by using amino isopropyl ethoxysilane (AIES).

The treatment with coupling agent of the glass is carried out at 30-80°C followed by devolatilization of glass surface at same temperature.

Preferably, the pre-stretched fabric is selected from aramid, carbon, basalt, polyester, glass. More preferably, the pre-stretched fabric used is unidirectional or bidirectional glass fabric. Most preferably, the pre-stretched glass fabric used is a yarn woven and non-woven fabrics of 70-200 GSM.

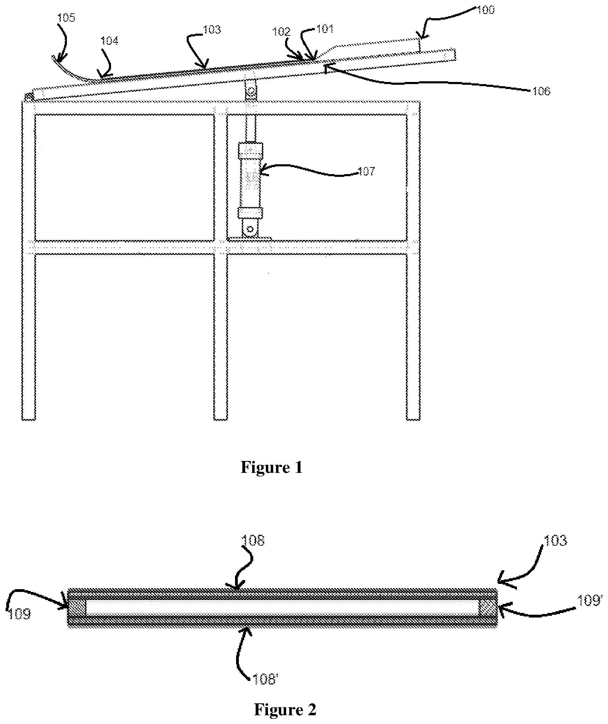

Disclosed is a system for manufacturing moulded laminated reinforced glass based on resin transfer technique under gravity. Figure 1 illustrates the system for manufacturing moulded laminated reinforced glass based on resin transfer technique under gravity.

The said system comprises
a mechanically actuated platform (106) provided with a hydraulic actuation mechanism (107) which is configured to put the said actuation platform in angular motion and controls the degree of inclination from the ground;
a mould assembly (103) having an upper glass sheet (108) placed at predefined distance over the lower glass sheet (108') and sealed by placing spacers (109, 109') at all three edges;
said mould assembly provided with a resin inlet (101) at one end and a resin outlet (105) at opposite end and connected to said inlet (101) and outlet (105) through flat silicone rubber tubes (102) and (104) respectively; and
a hopper (100) having foldable flat base which is convertible into an accumulator at beginning of resin inlet (101) opposite to mould assembly and connected to it through silicon rubber tube (102).

A prefabricated mould assembly made of two glass plates (108, 108') separated by spacers (109, 109') of 10 mm thick cross-linked polyethylene foam of 20 mm width i.e. adhesive tape. The mould assembly is placed on said mechanically actuated platform in angular motion. The resin is discharged into the mould assembly under gravity, at different degree of inclination. The degree of inclination of the said platform is controlled by said actuation mechanism (107). Optionally, the degree of inclination of said platform may be controlled manually. Degree of inclination ranges from 5 to 45 degree, more precisely 5 to 20 degree, most precisely 5 to 15 degree.

The said hopper (103) having foldable flat base so as to degas the nano composite liquid system upon charging over it. After degassing the nano composite liquid system i.e. `Nano dispersed liquid resin', the said foldable flat base of said hopper is converted into an accumulator to allow the flow of the degassed resin through the resin inlet (101) and flat tube (102) into said mould assembly (103) till it get completely filled and flows into flat tube (104) and outlet (105).

When said `Nano dispersed liquid resin' is charged into said mould assembly (105) through said inlet (101), one is required to monitor the level of said nano composite liquid system in the said outlet (105). Once said nano composite liquid system reaches to the marking level of said outlet (105) at respective degree of inclination, the flow of said nano composite liquid system is stopped by moving said actuation platform (106) at rest i.e. zero degree of inclination. Chilled air is passed through said mould assembly to reduce the heat generated by exothermic reaction followed by removing moulded laminated reinforced glass.

There is provided a process of manufacturing moulded laminated reinforced composite glass of the invention by resin transfer technique under gravity using system of figure 1.

In the said process, the glass is surface treated with amino isopropyl ethoxy silane (AIES) by dipping. Optionally, said glass is surface coated with polymeric system by conventional technique. Preferably, the glass is surface treated with coupling agent followed by polymeric coating. The said coated / treated glass is devolatalized. The said glass sheet which is optionally surface treated and /or coated being upper glass sheet (108) is placed at predefined distance over another said glass sheet which is optionally surface treated and /or coated being lower glass sheet (108') and sealing three sides using sealant by placing spacers (109, 109') to obtain a predefined size mould (103). Placing the said mould (103) on said actuation platform (106) and connected to said inlet (101) and said outlet (105) through said flat tubes (102) and (103) respectively. The said inlet (101) is connected to said hopper (100). The said mould is inclined at 5 to 45 degree by using said hydraulic actuation mechanism (107). The nano composite liquid system is charged over foldable flat base so as to degas it. After degassing the nano composite liquid system i.e. `Nano dispersed liquid resin', the said foldable flat base of said hopper is converted into an accumulator to allow the flow of the degassed resin through the said inlet (101) and flat tube (102) into said mould assembly (103) at the inclined position till it get completely filled and just start flowing into flat tube (104) and outlet (105). The flow of said nano composite liquid system is stopped by moving said actuation platform (106) at rest i.e. zero degree of inclination. The said nano composite liquid system is allowed to gel for predefined gelling period and chilled air is passed over the said mould to obtain moulded laminated reinforced composite glass. Optionally moulded laminated reinforced glass is post cured by heating at temperature in the range of 60° to 80° C for 2 hours before removing said moulded laminated reinforced glass from said mould assembly.

Preferably, the angle of inclination of said mould while charging said nano composite liquid system is more precisely in the range of 5 to 20 degree, most precisely in the range of 5 to 15 degree.

Basically, the thickness of the glass is in the range of 1 mm to 30 mm.

The glass is surface treated with AIES coupling agent.

The treatment with coupling agent is carried out at 30°-80°C followed by devolatilization of glass surface at same temperature.

Typically, said nano composite liquid system further comprises an extender. The resin used in the nano composite liquid system is as defined above.

The thickness of the said moulded laminated reinforced composite glass is the combined thickness of the glass sheets and the nano composite between them. More preferably, the said moulded laminated reinforced composite glass is transparent and has width of 1000 mm and length of 1500 mm Figure 2 illustrates mould assembly (103) used in the above described system wherein upper glass sheet which is optionally surface treated and /or coated (108) is placed at predefined distance over lower glass sheet which is optionally surface treated and /or coated (108') and said predefined distance is sealed by placing spacers (109, 109') at all three edges of said glass sheets. The spacers used are 10 mm thick and 20 mm width of cross-linked polyethylene foam. The said glass sheet is optionally surface treated with coupling agent by dipping or any other conventional method. The said glass sheet is optionally surface coated with polymeric system at 30° to 80° C by any conventional technique. The glass sheet is optionally surface treated with coupling agent followed by surface coating with polymeric system. The said coated / treated glass is devolatalized. The said treated / coated glass sheet being upper glass sheet (108) is placed at predefined distance over another said treated / coated glass sheet being lower glass sheet (108') and sealed by placing spacers (109, 109') at all three edges of said glass sheets to obtain a predefined size mould (103).

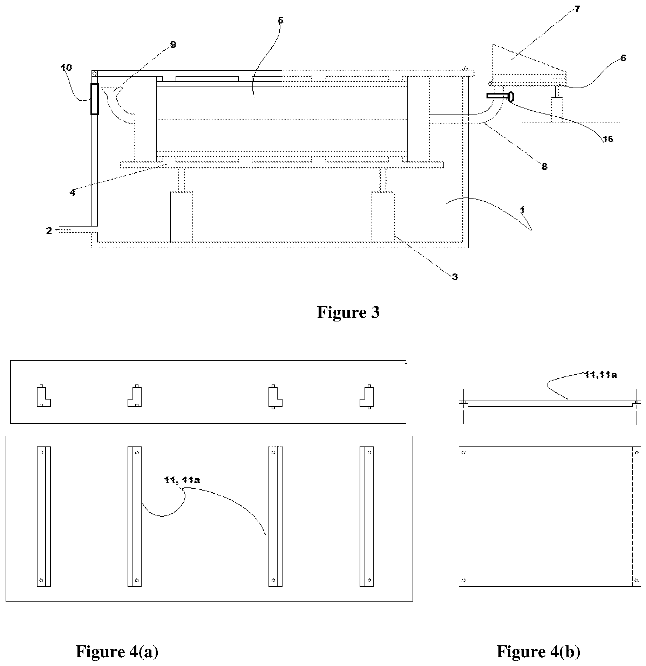

Disclosed is a system for manufacturing moulded laminated reinforced glass. Figure 3 illustrates the system for manufacturing moulded laminated reinforced glass.

In said system (ref Figure 3), a vacuum chamber (1) is provided with a vacuum line (2) at one side connected to the vacuum pump for air outlet and a resin inlet (8) positioned diagonally opposite to the said vacuum line. The said vacuum chamber is adapted to operate at 80 to 200 mbar. A hopper (7) is provided to said resin inlet at opening. The said hopper having foldable flat base (6) so as to degas the nano composite liquid system upon charging over it. After degassing the nano composite liquid system, the said foldable flat base of said hopper is converted into an accumulator to allow the flow of the degassed nano composite liquid system through the resin inlet line (8) into a mould assembly (5). The said system is provided with a mould assembly (5) comprising of two plates being upper plate (12) and lower plate (12'), and spacers (11). The said mould assembly is placed in the said vacuum chamber. The said two plates (12, 12') being placed apart by spacers (11) by placing spacers (11) at each of the four edges of the said plates of the mould. Each spacer (11) has guide pin at one end and pin hole at other end. Three spacers are placed at three edges of said plate and are interconnected through the guide pin and the pin hole mechanism to form three equidistant hinges. Fourth spacer (11) has one pin lock at the edge and placed at the fourth edge of the said plate and lock and seal the mould assembly (5). The said spacers (11) are pre-designed to accommodate the said plates (12, 12') on atop of it and closely engaged along with plates through the guide pin and the pin hole mechanism. There is also provided a pneumatic actuator (3) with pneumatic platform (4) in said vacuum chamber, particularly at its bottom. The said pneumatic actuator (3) actuates said mould assembly (5) by applying means of hydraulic actuation mechanism. There is also provided a controlling valve (16) over resin inlet (8) to control the flow of nano composite liquid system into said mould (5). A resin outlet (9) is provided to said mould assembly at opposite side of said resin inlet (8) and said outlet has marking till said nano composite liquid system should be filled. A window (10) is provided to said vacuum chamber for viewing and monitoring the level of said nano composite liquid system in the resin outlet (9). When said nano composite liquid system is charged into said mould assembly (5) through resin inlet line (8), one required to monitor the level of said nano composite liquid system in the resin outlet (17) through said window (14). Once said nano composite liquid system reaches to the marking level of resin outlet (17), the flow of said nano composite liquid system is stopped by using controlling valve (16).

In still another ambodiment, there is provided a process for manufacturing of moulded laminated reinforced glass of the invention by using system disclosed above. In the said process, glass sheets (14, 14') are treated with amino isopropyl ethoxy silane (AIES)by dipping. These surface treated glass sheets (14, 14') are optionally coated with polymeric system at 30° to 80° C by electrometric technique. The said coated / treated glass sheets (14, 14') are subjected to devolatilization. A cross linked polyethylene foam being upper support (13) is placed in close contact with upper plate (12) in said mould assembly (5) followed by placing said treated / coated glass sheet being upper glass sheet (14) over said upper support. Then spacers (11) are placed on said upper glass sheet covering all edges followed by placing said another treated / coated glass sheet being lower glass sheet (14') over the said spacer (11). The cross linked polyethylene foam being lower support (13') is placed in close contact with said lower plate (12') in said mould assembly (5). The said upper and lower plate including support and glass are placed apart by spacers (11) by placing spacers (11) at each of the four edges between them. Each spacer (11) has guide pin at one end and pin hole at other end. Three spacers are placed at three edges of said plate and are interconnected through the guide pin and the pin hole mechanism to form three equidistant hinges. Fourth spacer (11) has one pin lock at the edge and placed at the fourth edge of the said plate and lock and seal the mould assembly (5). The said spacers (11) are pre-designed to accommodate the said plates including support and glass on atop of it and closely engaged along with plates including support and glass through the guide pin and the pin hole mechanism. The said mould assembly is actuated by hydraulic actuation mechanism at actuation pressure of 2 to 6 kg/cm² followed by applying vacuum pressure of 80 to 200 mbar on the vacuum chamber and checking leakage as well as removing air. A nano composite liquid system is casted on the hopper of foldable flat base and allowed to stand for 30 to 130 sec, preferably 60 sec to degas it. On degassing, the said hopper (7) of foldable flat base (6) is converted into accumulator containing said degassed nano composite liquid system. The said degassed nano composite liquid system is charged into said mould assembly (5) from said accumulator through a resin inlet (8) using a control valve (16). The level of said composite in a resin outlet (9) is monitored through window (10) and once it reaches to the marking level of resin outlet (9), then the flow of said nano composite liquid system into said mould assembly is stopped by using controlling valve (16). The said composite in the said mould assembly is allowed to gel for a predefined gelling period followed by shutting off the actuation mechanism by releasing vacuum. Chilled air is passed through said mould assembly to reduce heat generated by exothermic reaction followed by removing moulded laminated reinforced glass. Optionally moulded laminated reinforced glass is post cured by heating at temperature in the range of 60° to 80°C for 2 hours before removing said moulded laminated reinforced glass from said mould assembly. The said glass has been surface treated with amino isopropyl ethoxy silane (AIES), wherein said glass includes Float Glass; and the nano composite liquid system comprises at least one resin selected from polyester and /or epoxy, at least one curing system comprising cobalt octoate and methyl ethyl ketone peroxide and nano particles selected from carbon nanotubes, nano clay namely MMT clay, and /or Nano Zeolite uniformly dispersed in the resin. The actuation pressure used is 2 to 6 kg/cm².

Disclosed is another process for manufacturing the moulded laminated reinforced composite glass of the invention by using systems disclosed herein. In the said process, glass sheets (14, 14') are treated with coupling agent by dipping or any other conventional method. Optionally, said surface treated glass sheets (14, 14') are coated with polymeric system at 30° to 80° C by electrometric technique or any other conventional technique. Preferably, the glass sheets (14, 14') are treated with coupling agent followed by polymeric coating. The said coated / treated glass sheets (14, 14') are devolatalized. A cross linked polyethylene foam being upper support (13) is placed in close contact with upper plate (12) in said mould assembly (5) followed by placing said treated / coated glass sheet being upper glass sheet (14) over said upper support. The spacers (11) are placed over to cover all edges of the said upper glass sheet. Further, a bi-directionally pre-tensioned synthetic fabric (17) is placed over spacers (11). Again spacers (11a) are placed over covering all edges of the said fabric followed by placing said treated / coated glass sheet being lower glass sheet (14') over the said spacers (11a). A cross linked polyethylene foam being lower support (13') is placed over said lower glass sheet and in close contact with said lower plate (12') in mould assembly (5). Thus, said upper and lower plate including support and glass and said fabric are placed apart by placing spacer (11) and (11a) on four edges between them. Thus, said upper and lower plate including support, glass and synthetic fabric are placed apart by spacers (11, 11a) by placing spacers (11, 11a) at each of the four edges between them. Each spacer (11, 11a) has guide pin at one end and pin hole at other end. Three spacers are placed at three edges of said fabric at both side and are interconnected through the guide pin and the pin hole mechanism to form three equidistant hinges. Fourth spacer (11) has one pin lock at the edge and placed at the fourth edge of the said fabric at both side and lock and seal the mould assembly (5). The said spacers (11, 11a) are pre-designed to accommodate the said plates including support, glass and synthetic fabric on atop of it and closely engaged along with plates including support, glass and synthetic fabric through the guide pin and the pin hole mechanism. The said mould assembly is actuated by hydraulic actuation mechanism at actuation pressure of 2 to 6 Kg/cm² followed by applying vacuum pressure of 80 to 200 Mbar on the vacuum chamber and checking leakage as well as removing air. A nano composite liquid system is casted on the hopper of foldable flat base and is allowed to stand for 30 to 130 sec, preferably 60 sec to degas the said composite. The said hopper (7) of foldable flat base (6) is converted into accumulator containing said degassed nano composite liquid system. The said degassed nano composite liquid system is charged into said mould assembly (5) from said accumulator through a resin inlet (8) using a control valve (16). The level of said composite in a resin outlet (9) is monitored through window (10) and once it reaches to the marking level of resin outlet (9), then the flow of said nano composite liquid system into said mould assembly (5) is stopped by using controlling valve (16). The said composite in the said mould assembly is allowed to gel for a predefined gelling period followed by shutting off the actuation mechanism by releasing vacuum. Chilled air is passed through said mould assembly to reduce heat generated by exothermic reaction followed by removing moulded laminated reinforced glass. Optionally moulded laminated reinforced glass is post cured by heating at temperature in the range of 60° to 80°C for 2 hours before removing said moulded laminated reinforced glass from said mould assembly. The said moulded laminated reinforced glass comprises a nano composite liquid system comprising at least one resin selected from polyester and /or epoxy, at least one curing agent and at least one nano particle uniformly dispersed in the resin and 5 % to 10 % (by vol.) of pre-stretched fabric embedded within the resin matrix.

Typically, the composite is charged under vacuum in the range from 80 to 200 mbar (by vacuum gauze).

The synthetic fabric is pre-tensioned by stretching said fabric in clockwise direction at one end and at the same time stretching said fabric in anti-clockwise direction at exactly opposite end to produce bi-directionally pre-tensioned synthetic fabric (17).

Preferably, the bi-directionally pre-tensioned synthetic fabric used is selected from aramid, carbon, basalt, polyester, glass. More preferably, the said fabric is unidirectional or bidirectional glass fabric. Most preferably, the fabric is a glass yarn roving fabric of 70-200 GSM. Preferably, the synthetic fabric is dehumidified by known processes including by passing through IR heating oven before using.

Figure 4 illustrates structural drawings of spacer 11 and 11a used for producing said mould assembly (5).

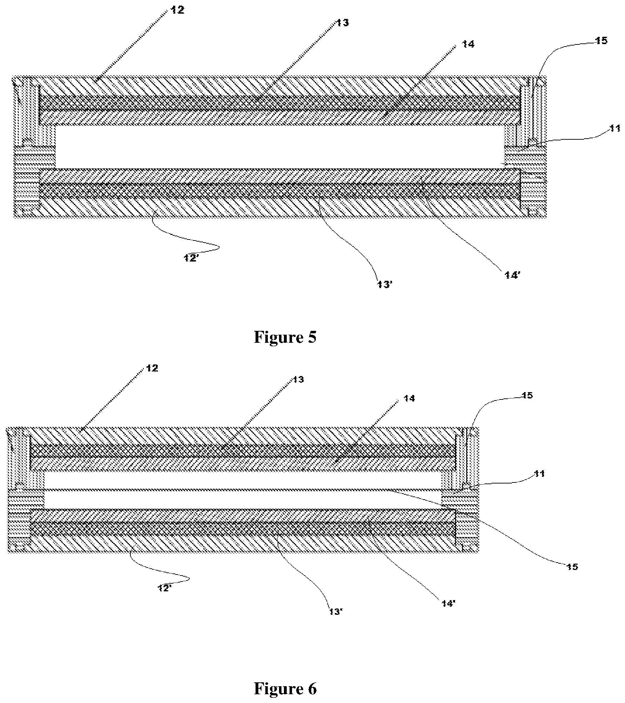

Figure 5 illustrate mould assembly (5) wherein a cross linked polyethylene foam being upper support (13) is placed in close contact with upper plate (12) of said mould assembly (5) followed by placing said treated / coated glass sheet being upper glass sheet (14) over said upper support. Then spacers (11) are placed on said upper glass sheet covering all edges followed by placing said another treated / coated glass sheet being lower glass sheet (14') over the said spacer (11). The cross linked polyethylene foam being lower support (13') is placed in close contact with said lower plate (12') in said mould assembly (5). Thus, said upper and lower plate including support and glass are placed apart by placing spacers (11) at each of the four edges between them. Each spacer (11) has guide pin at one end and pin hole at other end. Three spacers are placed at three edges of said plate and are interconnected through the guide pin and the pin hole mechanism to form three equidistant hinges. Fourth spacer (11) has one pin lock at the edge and placed at the fourth edge of the said plate and lock and seal the mould assembly (5). The said spacers (11) are pre-designed to accommodate the said plates (12, 12') on atop of it and closely engaged along with plates through the guide pin and the pin hole mechanism.

Figure 6 illustrate another mould assembly (5) wherein cross linked polyethylene foam being upper support (13) is placed in close contact with upper plate (12) in said mould assembly (5) followed by placing said treated / coated glass sheet being upper glass sheet (14) over said upper support. The spacers (11) are placed over to cover all edges of the said upper glass sheet.

Further, a bi-directionally pre-tensioned synthetic fabric (17) is placed over spacers (11). Again spacers (11a) are placed over covering all edges of the said fabric followed by placing said treated / coated glass sheet being lower glass sheet (14') over the said spacers (11a). A cross linked polyethylene foam being lower support (13') is placed over said lower glass sheet and in close contact with said lower plate (12') in mould assembly (5). Thus, the said upper and lower plate including support, glass and synthetic fabric are placed apart by spacers (11, 11a) by placing spacers (11, 11a) at each of the four edges between them. Each spacer (11, 11a) has guide pin at one end and pin hole at other end. Three spacers are placed at three edges of said fabric at both side and are interconnected through the guide pin and the pin hole mechanism to form three equidistant hinges. Fourth spacer (11) has one pin lock at the edge and placed at the fourth edge of the said fabric at both side and lock and seal the mould assembly (5). The said spacers (11, 11a) are pre-designed to accommodate the said plates including support, glass and synthetic fabric on atop of it and closely engages along with plates including support, glass and synthetic fabric through the guide pin and the pin hole mechanism to seal the assembly.

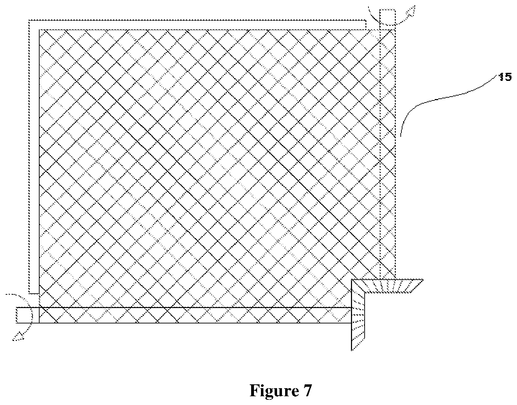

Figure 7 illustrates a bi-directionally pre-tensioned synthetic fabric (17) wherein synthetic fabric is pre-tensioned by stretching said fabric in clockwise direction at one end and at the same time stretching said fabric in anti-clockwise direction at exactly opposite end to produce bi-directionally pre-tensioned synthetic fabric (17). This is further used in the said mould.

Typical nano composite liquid systems including that one used according to the claims are as follows:
90 to 100 phr of unsaturated polyester resin, 5 to 25 phr two part system epoxy resin (epoxy + hardener) and 0.1 % to 10 % nano particles;
100 phr of polyester (supplied by Satyen Polymer. Pvt. Ltd.), 2 % of cobalt octoate, 1.5 % of methyl ethyl ketone peroxide (MEKP), 0.1 % of nano carbon tubes (MW), 0.3 % of nano clay, 5 % of epoxy (supplied by Atul Chemicals Pvt. Ltd.) and 3 % of vinyl acetate;
100 phr of polyester (supplied by Satyen Polymer. Pvt. Ltd.), 2 % of cobalt octoate, 1.5 % of methyl ethyl ketone peroxide (MEKP), 0.1 % of nano carbon tubes (MW), 0.2 % of nano clay, 4 % of epoxy (supplied by Atul Chemicals Pvt. Ltd.), and 2 % of vinyl acetate;
100 phr of polyester (supplied by Satyen Polymer. Pvt. Ltd.), 2 % of cobalt octoate, 1.5 % of methyl ethyl ketone peroxide (MEKP), 0.5 % of nano clay, 5 % of epoxy (supplied by Atul Chemicals Pvt. Ltd.), and 2 % of vinyl acetate;
100 phr of polyester (supplied by Satyen Polymer. Pvt. Ltd.), 2 % of cobalt octoate, 1.5 % of methyl ethyl ketone peroxide (MEKP), 0.3 % of nano carbon tube, 4 % of vinyl acetate and 2 % of methanol;
100 phr of polyester (supplied by Satyen Polymer. Pvt. Ltd.), 2 % of cobalt octoate, 1.5 % of methyl ethyl ketone peroxide (MEKP), 0.2 % of nano carbon tube, 5 % of epoxy (supplied by Atul Chemicals Pvt. Ltd.), 2 % of vinyl acetate and 1 % of methanol;
100 phr of polyester (supplied by Satyen Polymer. Pvt. Ltd.), 2 % of cobalt octoate, 1.5 % of methyl ethyl ketone peroxide (MEKP), 0.7 % of nano clay, 4 % of vinyl acetate and 2 % of methanol;
100 phr of polyester (supplied by Satyen Polymer. Pvt. Ltd.), 2 % of cobalt octoate, 1.5 % of methyl ethyl ketone peroxide (MEKP), 0.2 % of carbon nano tube, 5 % of epoxy (supplied by Atul Chemicals Pvt. Ltd.), 2 % of vinyl acetate and 2 % of methanol; and
100 phr of polyester (supplied by Satyen Polymer. Pvt. Ltd.), 2 % of cobalt octoate, 1.5 % of methyl ethyl ketone peroxide (MEKP), 0.7 % of nano clay, 4 % of vinyl acetate and 2 % of methanol.

Preferably, the nano particles are exfoliated and intercalated to a level of minimum refractive index with the base resin. The exfoliation or intercalation of nano particles is done by sonication. The said moulded laminated reinforced composite glass is transparent and light weight with high tensile strength, high flexural strength, high bending strength, high impact strength and load bearing capacity. The composite glass of the invention shows drilling and cutting property on diamond cutter. It can be cut to any complex shape by diamond cutter. The composite glass has more uniformity in properties and integrity due to surface treatment. Also, the composite glass exhibits excellent drop impact. The said composite glass is safety compliant, durable and with reduced laceration potential in the event of a vehicular crash. A glazing (i.e. window) being thin and light weight possesses the durability, sound-damping and scratch proof properties which are generally associated with thicker and heavier glazings.

### BEST MODE OR EXAMPLES FOR WORKING OF THE INVENTION

The present invention is described in the examples given below; further these are provided only to illustrate the invention and therefore should not be construed to limit the scope of the claims.

### Example 1

### A moulded laminated reinforced composite glass- A1

A moulded laminated reinforced composite glass product **A1** having a cross section 8x 1000 of length 1000 mm was developed.

A nano composite liquid system was created by adding 100 phr of polyester (supplied by Satyen Polymer. Pvt. Ltd.), 2 % of cobalt octoate, 1.5 % of methyl ethyl ketone peroxide (MEKP), 0.1 % of nano carbon tubes (MW), 0.3 % of nano clay, 5 % of epoxy (supplied by Atul Chemicals Pvt. Ltd.), and 3 % of vinyl acetate followed by sonication. This example used the above mentioned nano composite liquid system.

Ordinary 1.5 mm glass without surface treatment was used here. The said glass sheet being upper glass sheet (108) was placed at predefined distance over another said glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) and flat tube (102) into mould assembly (103) to completely fill mould i.e. gap between upper and lower glass sheets.. The said actuation platform (106) was operated at 5 degree of inclination from ground by using hydrolytic actuation mechanism (107). The nano composite liquid system was discharged into the mould (103) under gravity at 5 degree of inclination.

The said nano composite was allowed to gel and chilled air was passed over the said mould (103) to obtain moulded laminated reinforced composite glass. The heat of reaction, transmittance in visible light I/I⁰ (a.u), Surface Indolence and Air bubble of the moulded laminated reinforced composite glass were checked and observations were tabulated in Table 1.

### Example 2

### A moulded laminated reinforced composite glass - A2

A moulded laminated reinforced composite glass product **A2** having a cross section 8x 1000 of length 1000 mm was developed by following the procedure as well as nano composite liquid system of example 1 except keeping the mould inclined at 10° angle. The heat of reaction, transmittance in visible light I/I⁰ (a.u), Surface Indolence and Air bubble of the product was checked and observations were tabulated in Table 1.

### Example 3

### A moulded laminated reinforced composite glass - A3

A moulded laminated reinforced composite glass product **A3** having a cross section 8 x 1000 of length 1000 mm was developed by following the procedure as well as nano composite liquid system of example 1 except keeping the mould inclined at 15° angle. The heat of reaction, transmittance in visible light I/I⁰ (a.u), Surface Indolence and Air bubble of the product were checked and observations were tabulated in Table 1.

### Example 4

### A moulded laminated reinforced composite glass - B1

A moulded laminated reinforced composite glass product **B1** having a cross section 8 x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.1 % of nano carbon tubes (MW), 0.3 % of nano clay, 5 % of epoxy (supplied by Atul Chemicals Pvt. Ltd.), and 3 % of vinyl acetate followed by sonication. This example used the above mentioned nano composite liquid system.

Ordinary 3 mm glass was surface treated with amino isopropyl ethoxy silane (AIES) and used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) and flat tube (102) into mould assembly (103) to completely fill mould i.e. gap between upper and lower glass sheets. The said actuation platform (106) was operated at 5 degree of inclination from ground by using hydrolytic actuation mechanism (107). The nano composite liquid system was discharged into the mould (103) under gravity at 5 degree of inclination.

The said nano composite was allowed to gel and chilled air was passed over the said mould (103) to obtain moulded laminated reinforced composite glass. The heat of reaction, transmittance in visible light I/I⁰ (a.u), Surface Indolence and Air bubble of the said moulded laminated reinforced composite glass were checked and observations were tabulated in Table 1.

### Example 5

### A moulded laminated reinforced composite glass - B2

A moulded laminated reinforced composite glass product **B2** having a cross section 8x 1000 of length 1000 mm was developed by following the procedure as well as nano composite liquid system of example 4 except keeping the mould inclined at 10° angle. The heat of reaction, transmittance in visible light I/I⁰ (a0.u), Surface Indolence and Air bubble of the product were checked and observations were tabulated in Table 1.

### Example 6

### A moulded laminated reinforced composite glass - B3

A moulded laminated reinforced composite glass product **B3** having a cross section 8x 1000 of length 1000 mm was developed by following procedure as well as nano composite liquid system of example 4 except keeping the mould inclined at 15° angle. The heat of reaction, transmittance in visible light I/I⁰ (a.u), Surface Indolence and Air bubble of the product were checked and observations were tabulated in Table 1.

### Comparative Example 7

### A moulded laminated reinforced composite glass - C1

A moulded laminated reinforced composite glass product **C1** having a cross section 8 x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.1 % of nano carbon tubes (MW), 0.3 % of nano clay, 5 % of epoxy (supplied by Atul Chemicals Pvt. Ltd.), and 3 % of vinyl acetate followed by sonication. This example used the above mentioned nano composite liquid system.

Ordinary 6 mm glass was surface treated with toluene diisocynate (TDI) and used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of degassed nano composite liquid system through the resin inlet (101) and flat tube (102) into mould assembly (103) to completely fill mould i.e. gap between upper and lower glass sheets. The said actuation platform (106) was operated at 5 degree of inclination from ground by using hydrolytic actuation mechanism (107). The nano composite liquid system was discharged into the mould (103) under gravity at 5 degree of inclination.

The said nano composite was allowed to gel and chilled air was passed over the said mould (103) to obtain moulded laminated reinforced composite glass. The heat of reaction, transmittance in visible light I/I⁰ (a.u), Surface Indolence and Air bubble of the product were checked and observations were tabulated in Table 1.

### Comparative Example 8

### A moulded laminated reinforced composite glass - C2

A moulded laminated reinforced composite glass product C2 having a cross section 8x 1000 of length 1000 mm was developed by following the procedure as well as nano composite liquid system of example 7 except keeping the mould inclined at 10° angle. The heat of reaction, transmittance in visible light I/I⁰ (a.u), Surface Indolence and Air bubble of the product were checked and observations were tabulated in Table 1.

### Comparative Example 9

### A moulded laminated reinforced composite glass - C3

A moulded laminated reinforced composite glass product **C3** having a cross section 8x 1000 of length 1000 mm was developed by following the procedure as well as nano composite liquid system of example 7 except keeping the mould inclined at 15° angle. The heat of reaction, transmittance in visible light I/I⁰ (a.u), Surface Indolence and Air bubble of the product were checked and observations were tabulated in Table 1.

### Comparative Example 10

### A moulded laminated reinforced composite glass - D1

A moulded laminated reinforced composite glass product **D1** having a cross section 8 x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.1 % of nano carbon tubes (MW), 0.3 % of nano clay, 5 % of epoxy (supplied by Atul Chemicals Pvt. Ltd.), and 3 % of vinyl acetate followed by sonication. This example used the above mentioned nano composite liquid system.

Toughened 6 mm glass was surface treated with amino isopropyl ethoxy silane (AIES) and used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed the nano composite liquid system through the resin inlet (101) flat tube (102) into mould assembly (103) to completely fill mould i.e. gap between upper and lower glass sheets. The said actuation platform (106) was operated at 5 degree of inclination from ground by using hydrolytic actuation mechanism (107). The nano composite liquid system was discharged into the mould (103) under gravity at 5 degree of inclination.

The said nano composite was allowed to gel and chilled air was passed over the said mould (103) to obtain moulded laminated reinforced composite glass. The heat of reaction, transmittance in visible light I/I⁰ (a.u), Surface Indolence and Air bubble of the product were checked and observations were tabulated in Table 1.

### Comparative Example 11

### A moulded laminated reinforced composite glass - D2

A moulded laminated reinforced composite glass product **D2** having a cross section 8x 1000 of length 1000 mm was developed by following the procedure as well as nano composite liquid system of example 10 except keeping the mould inclined at 10° angle. The heat of reaction, transmittance in visible light I/I⁰ (a.u), Surface Indolence and Air bubble of the product were checked and observations were tabulated in Table 1.

### Comparative Example 12

### A moulded laminated reinforced composite glass - D3

A moulded laminated reinforced composite glass product **D3** having a cross section 8x 1000 of length 1000 mm was developed by following the procedure as well as nano composite liquid system of example 10 except keeping the mould inclined at 15° angle. The heat of reaction, transmittance in visible light I/I⁰ (a.u), Surface Indolence and Air bubble of the product were checked and observations were tabulated in Table 1.

**Table 1 : Properties of moulded laminated reinforced composite glass - A1 to A3, B1 to B3 and C1 to C3**

| **Products** | **Type of Glass used** | **Degree of Inclination** | **Heat of Reaction** | **Transmittance in visible light I/I⁰ (a.u)** | **Surface indolence** | **Air Bubble** |
|---|---|---|---|---|---|---|
| A1 | Ordinary 1.5mm Glass (without surface treatment) | 5° | 160 | 92 | Low | Low |
| A2 | | 10° | 165 | 90 | Moderate | Moderate |
| A3 | | 15° | 170 | 86 | Higher Side | Higher |
| B1 | Ordinary 3mm (AIES) Treated Glass | 5° | 166 | 89 | Low | Low |
| B2 | | 10° | 167 | 87 | Moderate | Moderate |
| B3 | | 15° | 170 | 85 | Higher Side | Higher |
| C1 | Ordinary 6 mm (TDI) treated Glass | 5° | 162 | 89 | Low | Low |
| C2 | | 10° | 165 | 87 | Moderate | Moderate |
| C3 | | 15° | 170 | 85 | Higher Side | Higher |
| D1 | Toughened 6 mm (AIES) treated Glass | 5° | 166 | 89 | L ow | Low |
| D2 | | 10° | 165 | 87 | Moderate | Moderate |
| D3 | | 15° | 168 | 85 | Higher Side | Higher |

The products A1 to A3, B1 to B3, C1 to C3 and D1 to D3 were made by using treated and untreated glass at different degrees of inclination. The charging of resin is executed by maintaining different degrees of inclination i.e. 5 to 15 degree. Degree of Inclination has direct impact on thickness variation and curing mechanisms of the resin. The charging of resin at more inclination results in bulging of resin at the centre part of the mould and uncontrolled process due to leakage problem. Higher inclination leads to faster curing and high exothermic reaction. Degree of inclination and surface treatments imparts effects on various properties of glass as shown in Table-1. A1, B1, C1, and D1 has shown excellent results like low heat of reaction, high transmittance in visible light I/I⁰ (a.u), low Surface Indolence and low Air bubble. A2, B2, C2, and D2 has shown excellent results like low heat of reaction, high transmittance in visible light I/I⁰ (a.u), low Surface Indolence and low Air bubble as well as we have not observed problem of bulging of resin at the central part of the mould while charging resin at 10° inclination, leakage and process of charging and curing was well controlled. A3, B3, C3, and D3 has shown satisfactory results of heat of reaction, transmittance in visible light I/I⁰ (a.u), moderate Surface Indolence and moderate Air bubble.

### Comparative Example 13

### A moulded laminated reinforced composite glass - E

A moulded laminated reinforced composite glass product E having a cross section 8 x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.1 % of nano carbon tubes (MW), 0.2 % of nano clay, 4 % of epoxy (supplied by Atul Chemicals Pvt. Ltd.), and 2 % of vinyl acetate followed by sonication. This example used the above mentioned nano composite liquid system.

Ordinary 1.5 mm glass without surface treatment was used here. The said glass sheet being upper glass sheet (108) was placed at predefined distance over another said glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. The heat of reaction and bonding between glass and resin of the product were checked and observations were tabulated in Table 2.

### Comparative Example 14

### A moulded laminated reinforced composite glass - F1

A moulded laminated reinforced composite glass product **F1** having a cross section 8 x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.5 % of nano clay, 5 % of epoxy (supplied by Atul Chemicals Pvt. Ltd.), and 2 % of vinyl acetate followed by sonication. This example used the above mentioned nano composite liquid system.

Ordinary 1.5 mm glass treated by dipping with polyurethane (supplied by Bayer AG) was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination. The said nano composite was allowed to gel and chilled air was passed over the said mould (103) to obtain moulded laminated reinforced composite glass. The heat of reaction and bonding between glass and resin of the product were checked and observations were tabulated in Table 2.

### Comparative Example 15

### A moulded laminated reinforced composite glass - F2

A flat Glass laminated transparent nano composites product **F2** having a cross section 8 x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.3 % of nano carbon tube, 4 % of vinyl acetate and 2 % of methanol followed by sonication. This example used the above mentioned nano composite liquid system.

Ordinary 1.5 mm glass treated by dipping with polyurethane (supplied by Bayer AG) was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed the nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. The heat of reaction and bonding between glass and resin of the product were checked and observations were tabulated in Table 2.

### Comparative Example 16

### A moulded laminated reinforced composite glass - G1

A moulded laminated reinforced composite glass product **G1** having a cross section 8x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.2 % of nano carbon tube, 5 % of epoxy (supplied by Atul Chemicals Pvt. Ltd.), 2 % of vinyl acetate and 1 % of methanol followed by sonication. This example used the above mentioned nano composite liquid system.

Ordinary 1.5 mm Glass treated by dipping with polyvinyl acetate was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. The heat of reaction and bonding between glass and resin of the product were checked and observations were tabulated in Table 2.

### Comparative Example 17

### A moulded laminated reinforced composite glass - G2

A moulded laminated reinforced composite glass product G2 having a cross section 8x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.7 % of nano clay, 4 % of vinyl acetate and 2 % of methanol followed by sonication. This example used the above mentioned nano composite liquid system.

Ordinary 1.5 mm glass treated by dipping with polyvinyl acetate was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. The heat of reaction and bonding between glass and resin of the product were checked and observations were tabulated in Table 2.

### Comparative Example 18

### A moulded laminated reinforced composite glass - H1

A moulded laminated reinforced composite glass product **H1** having a cross section 8x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.2 % of carbon nano tube, 5 % of epoxy (supplied by Atul Chemicals Pvt. Ltd.), 2 % of vinyl acetate and 2 % of methanol followed by sonication. This example used the above mentioned nano composite liquid system.

Ordinary 1.5 mm Glass treated by dipping with polymethyl acrylate was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. The heat of reaction and bonding between glass and resin of the product were checked and observations were tabulated in Table 2.

### Comparative Example 19

### A moulded laminated reinforced composite glass - H2

A moulded laminated reinforced composite glass product **H2** having a cross section 8x 1000 of length 1000 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.7 % of nano clay, 4 % of vinyl acetate and 2 % of methanol followed by sonication. This example used the above mentioned nano composite liquid system.

Ordinary 1.5 mm glass treated by dipping with polymethyl acrylate was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. The heat of reaction and bonding between glass and resin of the product were checked and observations were tabulated in Table 2.

**Table 2: Properties of moulded laminated reinforced composite glass products - E, F1 to F2, G1 to G2 and H1 to H2**

| **Product** | **Type of Glass used** | **Nano Composite: 100 Phr Polyester, 2% cobalt octoate, 1.5% methyl ethyl ketone peroxide (MEKP)** | | | | | **Heat of Reaction Temperature (°C)** | **Bonding Between Glass and Resin** |
|---|---|---|---|---|---|---|---|---|
| | | **Nano Materials (% wt)** | | **Extender (% wt)** | | | | |
| | | **Carbon nano tube** | **Nano clay** | **Vinyl acetate** | **Methanol** | **Epoxy** | | |
| E | Ordinary Glass without any coating and treatment | 0.10% | 0.20% | 2% | 0% | 4% | 160 | Broken into Fragments |
| F1 | Ordinary glass coated with Polyurethane | 0% | 0.50% | 2% | 0.00% | 5.00% | 160 | Broken into Fragments |
| F2 | | 0.30% | 0% | 4% | 2% | 0.00% | 150 | Broken into Fragments |
| G1 | Toughened glass coated with Polyvinyl Acetate | 0.20% | 0% | 2% | 1.00% | 5.00% | 150 | Broken into Fragments but does not come out |
| G2 | | 0.00% | 0.70% | 4% | 2% | 0.00% | 160 | Broken into Fragments but does not come out |
| H1 | Toughened glass coated with Methyl Acrylate | 0.20% | 0.00% | 2% | 2% | 5.00% | 145 | Broken into Fragments |
| H2 | | 0.00% | 0.70% | 4% | 2% | 0.00% | 165 | Broken into Fragments |

The discharging clear resin by manual technique has tendency of bubble formation and has bulging effect at the centre on higher inclination. The impact of angle of inclination on the properties of the glass was seen from Table 1. The nano composite used as well as surface treatment of glass play vital role on transparency, heat of reaction and bonding of glass to resin which can be observed from the results as shown in Table 2. All products were excellent in appearance but products, particularly G1 and G2 has shown excellent bonding between resin and glass as it was broken into fragments but broken glass pieces did not come out. While rest of the product was broken into fragments and spread out.

### Comparative Example 20

### A moulded laminated reinforced composite glass - I1

A moulded laminated reinforced composite glass product **I1** having a cross section 8 x 1000 of length 1000 mm was developed.

A nano composite was created by adding 100 phr of epoxy (supplied by Atul Chemicals Pvt. Ltd. and having 50 % epoxy resin and 50 % hardener), 0.2 % of carbon nano tube, 2 % of polyurethane and 1 % of polyvinyl ester followed by sonication. This example used the above mentioned nano composite liquid system.

Ordinary 1.5 mm glass treated by dipping with polyurethane was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. Transmittance in visible light I/I⁰ (a.u) and bonding between glass and resin of the product were checked and observations were tabulated in Table 3.

### Comparative Example 21

### A moulded laminated reinforced composite glass - I2

A moulded laminated reinforced composite glass product **I2** having a cross section 8 x 1000 of length 1000 mm was developed.

A nano composite was created by adding 100 phr of epoxy (supplied by Atul Chemicals Pvt. Ltd. and having 50 % epoxy resin and 50 % hardener), 0.7 % of nano clay, 4 % of polyurethane and 2 % of polyvinyl ester followed by sonication. This example used the above mentioned nano composite liquid system.

Ordinary 1.5 mm glass treated by dipping with polyurethane was used here. The said treated glass sheet being upper glass sheet (108) was placed at predefined distance over another said treated glass sheet being lower glass sheet (108). These glass sheets were separated by placing 10 mm thick cross-linked polyethylene foam of 20 mm width as spacers (109, 109') and thus sealed to obtain a predefined size mould (103). The mould assembled was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. Transmittance in visible light I/I⁰ (a.u) and bonding between glass and resin of the product were checked and observations were tabulated in Table 3.

### Comparative Example 22

### A moulded laminated reinforced composite glass - J1

A moulded laminated reinforced composite glass product **J1** having a cross section 8 x 1000 of length 1000 mm was developed.

A nano composite was created by adding 100 phr of epoxy (supplied by Atul Chemicals Pvt. Ltd. and having 50 % epoxy resin and 50 % hardener), 0.2 % of carbon nano tube, 4 % of polyurethane and 2 % of polyvinyl ester followed by sonication. This example used the above mentioned nano composite liquid system.

6 mm Toughened glass treated by dipping with polyvinyl acetate was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. Transmittance in visible light I/I⁰ (a.u) and bonding between glass and resin of the product were checked and observations were tabulated in Table 3.

### Comparative Example 23

### A moulded laminated reinforced composite glass - J2

A moulded laminated reinforced composite glass product **J2** having a cross section 8 x 1000 of length 1000 mm was developed.

A nano composite was created by adding 100 phr of epoxy (supplied by Atul Chemicals Pvt. Ltd. and having 50 % epoxy resin and 50 % hardener), 0.7 % of nano clay, 4 % of polyurethane and 2 % of polyvinyl ester followed by sonication. This example used the above mentioned nano composite liquid system.

6 mm Toughened glass treated by dipping with polyvinyl acetate was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground. The nano composite liquid system was discharged into the mould (103) under gravity at 10 degree of inclination.

The said nano composite was allowed to gel and chilled air was passed over the said mould (103) to obtain moulded laminated reinforced composite glass. Transmittance in visible light I/I⁰ (a.u) and bonding between glass and resin of the product were checked and observations were tabulated in Table 3.

### Comparative Example 24

### A moulded laminated reinforced composite glass - K1

A moulded laminated reinforced composite glass product **K1** having a cross section 8x 1000 of length 1000 mm was developed.

A nano composite was created by adding 100 phr of epoxy (supplied by Atul Chemicals Pvt. Ltd. and having 50 % epoxy resin and 50 % hardener), 0.2 % of carbon nano tube, 2 % of polyurethane and 1 % of polyvinyl ester followed by sonication. This example used the above mentioned nano composite liquid system.

6 mm Toughened glass treated by dipping with epoxy resin was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould (103) under gravity at 10 degree of inclination.

The said nano composite was allowed to gel and chilled air was passed over the said mould (103) to obtain moulded laminated reinforced composite glass. Transmittance in visible light I/I⁰ (a.u) and bonding between glass and resin of the product were checked and observations were tabulated in Table 3.

### Comparative Example 25

### A moulded laminated reinforced composite glass - K2

A moulded laminated reinforced composite glass product **K2** having a cross section 8x 1000 of length 1000 mm was developed.

A nano composite was created by adding 100 phr of epoxy (supplied by Atul Chemicals Pvt. Ltd. and having 50 % epoxy resin and 50 % hardener), 0.7 % of nano clay, 4 % of polyurethane and 2 % of polyvinyl ester followed by sonication. This example used the above mentioned nano composite liquid system.

6 mm Toughened glass treated by dipping with epoxy resin was used here. The said treated glass sheet being upper glass sheet (108) was placed at predefined distance over another said treated glass sheet being lower glass sheet (108'). These glass sheets were separated by placing 10 mm thick cross-linked polyethylene foam of 20 mm width as spacers (109, 109') and thus sealed to obtain a predefined size mould (103). The mould assembled (103) was placed on a actuated platform (106) in angular motion. The degree of inclination of the said platform was controlled by using hydrolytic actuation mechanism (107). The nano composite liquid system which was previously sonicated, was charged into a hopper (100) having foldable flat base so as to degas the nano composite liquid system. After degassing the nano composite liquid system, the said foldable flat base of said hopper (100) was converted into an accumulator further allowing the flow of the degassed nano composite liquid system through the resin inlet (101) flat tube (102) into mould assembly (103) to completely fill mould i.e. gap between upper and lower glass sheets. The said actuation platform (106) was operated at 10 degree of inclination from ground by using hydrolytic actuation mechanism (107). The nano composite liquid system was discharged into the mould under gravity at 10 degree of inclination.

The said nano composite was allowed to gel and chilled air was passed over the said mould (103) to obtain moulded laminated reinforced composite glass. Transmittance in visible light I/I⁰ (a.u) and bonding between glass and resin of the product were checked and observations were tabulated in Table 3.

**Table 3 : Properties of moulded laminated reinforced composite glass products - I1 to I2, J1 to J2 and K1 to K2**

| **Product** | **Type of Glass used** | **Nano Composite : 100 Phr Epoxy (50% Epoxy + 50% Hardner) supplied by Atul Pvt Ltd** | | | | **Transmit tance in visible light I/I⁰ (a.u)** | **Bonding Between Glass and Resin** |
|---|---|---|---|---|---|---|---|
| | | **Nano Materials** | | **Extender** | | | |
| | | **Carbon nano tube** | **Nano clay** | **Polyurethane** | **Polyvinyl ester** | | |
| I1 | Polyurethane coated ordinary Glass | 0.20% | 0% | 2% | 1.00% | 88 | Broken into Fragments |
| I2 | | 0.00% | 0.70% | 4% | 2% | 86 | Broken into Fragments |
| J1 | Polyvinyl Acetate coated Toughened Glass | 0.20% | 0% | 2% | 1.00% | 86 | Broken into Fragments |
| J2 | | 0.00% | 0.70% | 4% | 2% | 82 | Broken into Fragments |
| K1 | Epoxy coated Toughened Glass | 0.20% | 0% | 2% | 1.00% | 85 | Broken into Fragments |
| K2 | | 0.00% | 0.70% | 4% | 2% | 88 | Broken into Fragments |

Epoxy, Polyurethane and Polyvinyl acetate surface coating improved bonding between glass and resin. Thick and flexible coating on glass surface is more vulnerable in holding cured resin upon breakage of the product wherein rigid and thin coating holds resin profoundly. Table-3 shows thin flexible coating on top of treated glass surface holds thin glass broken fragment glass but reduces transparency to satisfactory level.

### Example 26

### A moulded laminated reinforced composite glass - L1

A moulded laminated reinforced composite glass product **L1** having a cross section 20 x 1000 of length 1500 mm was developed.

A nano composite was created by adding 100 phr of polyester (supplied by Satyen Polymer. Pvt. Ltd.), 2 % of cobalt octoate, 1.5 % of methyl ethyl ketone peroxide (MEKP), 0.1 % of carbon nano tube, 0.3 % of nano clay, 5 % of epoxy resin, 3 % of vinyl acetate followed by sonication. This example used the above mentioned nano composite liquid system.

3 mm ordinary glass treated by dipping with amino isopropyl ethoxy silane (AIES) was used here. The said treated glass was subjected to devolatilization. A cross linked polyethylene foam being upper support was placed in close contact with upper plate (12) in said mould assembly (5) followed by placing said treated glass sheet being upper glass sheet over said upper support. The spacers (11) were placed over to cover all edges of the said upper treated glass sheet. Further, a bi-directionally pre-tensioned synthetic E-glass fabric of 80 GSM (supplied by Woon's Corning) was placed over spacers (11). Again spacers (11a) were placed over covering all edges of the said fabric followed by placing said treated glass sheet being lower glass sheet over the said spacers (11a). A cross linked polyethylene foam being lower support was placed over said lower treated glass sheet and in close contact with said lower plate (12) in mould assembly (5). Thus, said upper and lower plate including support, glass and synthetic fabric were placed apart by spacers (11, 11a) by placing spacers (11, 11a) at each of the four edges between them. Each spacer (11, 11a) had guide pin at one end and pin hole at other end. Three spacers were placed at three edges of said fabric at both side and were interconnected through the guide pin and the pin hole mechanism to form three equidistant hinges. Fourth spacer (11) had one pin lock at the edge and placed at the fourth edge of the said fabric at both side and lock and seal the mould assembly (5). The said spacers (11, 11a) were pre-designed to accommodate the said plates including support, glass and synthetic fabric on atop of it and closely engaged along with plates including support, glass and synthetic fabric through the guide pin and the pin hole mechanism. The said mould assembly was actuated by hydraulic actuation mechanism into the vacuum chamber by applying vacuum pressure 200 mbar and checking leakage as well as removing air. The above-mentioned nano composite liquid system (i.e. nano dispersed liquid system) was casted on the hopper of foldable flat base and was allowed to stand for 60 seconds to degas said composite liquid system. The said hopper of foldable flat base was converted into accumulator containing said degassed nano composite liquid system. The said degassed nano composite liquid system was charged into said mould assembly from said accumulator through a resin inlet using a control valve. The level of said composite liquid system in a resin outlet was monitored through window and once it reached to the marking level of resin outlet (17), then the flow of said nano composite liquid system into said mould assembly was stopped by using controlling valve (16). The said composite liquid system in the said mould assembly was allowed to gel for complete gelling followed by shutting off the actuation mechanism by releasing vacuum. Chilled air was passed through said mould assembly to reduce heat generated by exothermic reaction followed by removing moulded laminated reinforced glass. The said moulded laminated reinforced glass was tested for Bending strength (N/mm²), Transmittance in visible light I/I⁰ (a.u), Surface Indolence (±mm), Ballistic 80 m/s speed (3J), and Air bubble. The results of the same were tabulated in Table 4.

### Example 27

### A moulded laminated reinforced composite glass - L2

A moulded laminated reinforced composite glass product **L2** having a cross section 20 x 1000 of length 1500 mm was developed by following the procedure as well as nano composite liquid system of example 26 except a bi-directionally pre-tensioned synthetic E-glass fabric of 120 GSM (supplied by Woon's Corning) used instead of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

### Example 28

### A moulded laminated reinforced composite glass - L3

A moulded laminated reinforced composite glass product **L3** having a cross section 20 x 1000 of length 1500 mm was developed by following the procedure as well as nano composite liquid system of example 26 except a bi-directionally pre-tensioned synthetic E-glass fabric of 200 GSM (supplied by Woon's Corning) used instead of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

### Example 29

### A moulded laminated reinforced composite glass - M1

A moulded laminated reinforced composite glass product **M1** having a cross section 20 x 1000 of length 1500 mm was developed by following the procedure as well as nano composite liquid system of example 26 except a pre-tensioned synthetic Unidirectional-glass fabric of 200 GSM (supplied by Woon's Corning) used instead of E-glass fabric of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

### Example 30

### A moulded laminated reinforced composite glass - N1

A moulded laminated reinforced composite glass product **N1** having a cross section 20 x 1000 of length 1500 mm was developed by following the procedure as well as nano composite liquid system of example 26 except a bi-directionally pre-tensioned synthetic Basalt fabric of 80 GSM (supplied by Woon's Corning) used instead of E-glass fabric of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

### Example 31

### A moulded laminated reinforced composite glass - N2

A moulded laminated reinforced composite glass product **N2** having a cross section 20 x 1000 of length 1500 mm was developed by following the procedure as well as nano composite liquid system of example 26 except a bi-directionally pre-tensioned synthetic Basalt fabric of 120 GSM (supplied by Woon's Corning) used instead of E-glass fabric of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

### Example 32

### A moulded laminated reinforced composite glass - N3

A moulded laminated reinforced composite glass product **N3** having a cross section 20 x 1000 of length 1500 mm was developed by following the procedure as well as nano composite liquid system of example 26 except a bi-directionally pre-tensioned synthetic Basalt fabric of 200 GSM (supplied by Woon's Corning) used instead of E-glass fabric of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

### Example 33

### A moulded laminated reinforced composite glass - O1

A moulded laminated reinforced composite glass product **O1** having a cross section 20 x 1000 of length 1500 mm was developed by following the procedure as well as nano composite liquid system of example 26 except a bi-directionally pre-tensioned synthetic polyester fabric of 180 GSM (supplied by Woon's Corning) used instead of E-glass fabric of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

### Example 34

### A moulded laminated reinforced composite glass - O2

A moulded laminated reinforced composite glass product **O2** having a cross section 20 x 1000 of length 1500 mm was developed by following the procedure as well as nano composite liquid system of example 26 except a bi-directionally pre-tensioned synthetic polyester fabric of 200 GSM (supplied by Woon's Corning) used instead of E-glass fabric of 80 GSM. Bending strength (N/mm²), Transmittance in visible light I/I⁰ (a.u), Surface Indolence (±mm), Ballistic 80 m/s speed (3J), and Air bubble were checked and observations were tabulated in Table 4.

**Table 4 : Properties of moulded laminated reinforced composite glass products - L1 to L3, M1, N1 to N3 and O1 to O2**

| | | | | | | | |
|---|---|---|---|---|---|---|---|
| • **Glass used:** 3 mm of Ordinary Glass treated with amino isopropyl ethoxy silane (AIES) | | | | | | | |
| • **Nano composite:** 100 phr of polyester + 2 % of cobalt octoate + 1.5 % of methyl ethyl ketone peroxide (MEKP) + 0.1 % of carbon nano tube + 0.3 % of nano clay + 5 % of epoxy resin + 3 % of vinyl acetate. | | | | | | | |
| • **Vacuum:** 200 Mbar | | | | | | | |

| **Product** | **Types of Fabric used** | **GSM** | **Bending Strength N/mm2** | **Transmittance in visible light I/I⁰ (a.u)** | **Surface indolence +/- mm** | **Ballistic 80 m/s speed 3J** | **Air Bubble** |
|---|---|---|---|---|---|---|---|
| L1 | E-Glass Fabrics | 80 | 70 | 90 | +/-2 | 1.2 au | 95% Micro voids free |
| L2 | | 120 | 73 | 86 | +/-2 | 1.03 au | 90% Micro voids free |
| L3 | | 200 | 80 | 84 | +/-2 | 1.04 au | 87% Micro voids free |
| M1 | E-Glass UD (A) | 200 | 40 | 82 | +/-2 | 2.5 au | 80% Micro voids free |
| N1 | Basalt Fabrics | 80 | 70 | 88 | +/-2 | 1.02 au | 90% Micro voids free |
| N2 | | 120 | 78 | 85 | +/-2 | 1.5 au | 94% Micro voids free |
| N3 | | 200 | 87 | 83 | +/-2 | 1.3 au | 90% Micro voids free |
| O1 | Polyester | 180 | 40 | 72 | +/-2 | 2.5 au | 60% Micro voids free |
| O2 | | 100 | 40 | 74 | +/-2 | 3_5 an | 65% Micro voids free |

Higher GSM fabrics results in a significant reduction in transparency but enhancement in resistance to compressive load, higher stiffness and bending strength as well. Pre-stretched fabrics contributes major role in enhancing compressive load bearing property of the product wherein fabrics GSM and text of fibres involved controls transparency of the product as shown in Table 4. The results of all the products except M1, O1 and O2 are excellent.

### Example 35

### A moulded laminated reinforced composite glass - P1

A moulded laminated reinforced composite glass product **P1** having a cross section 20 x 1000 of length 1500 mm was developed.

A nano composite liquid system was created by adding 100 phr of polyester (supplied by Satyen Polymer. Pvt. Ltd.), 2 % of cobalt octoate, 1.5 % of methyl ethyl ketone peroxide (MEKP), 0.1 % of carbon nano tube, 0.3 % of nano clay, 5 % of epoxy resin, 3 % of vinyl acetate followed by sonication. This example used the above mentioned nano composite liquid system.

3 mm ordinary glass treated by dipping with amino isopropyl ethoxy silane (AIES) was used here. The said treated glass is subjected to devolatilization before use in a mould assembly. A cross linked polyethylene foam being upper support was placed in close contact with upper plate (12) in said mould assembly (5) followed by placing said treated glass sheet being upper glass sheet over said upper support. The spacers (11) were placed over to cover all edges of the said upper treated glass sheet. Further, a bi-directionally pre-tensioned synthetic E-glass fabric of 80 GSM (supplied by Woon's Corning) was placed over spacers (11). Again spacers (11a) were placed over covering all edges of the said fabric followed by placing said treated glass sheet being lower glass sheet over the said spacers (11a). A cross linked polyethylene foam being lower support was placed over said lower treated glass sheet and in close contact with said lower plate (12) in mould assembly (5). Thus, said upper and lower plate including support, glass and synthetic fabric were placed apart by spacers (11, 11a) by placing spacers (11, 11a) at each of the four edges between them. Each spacer (11, 11a) had guide pin at one end and pin hole at other end. Three spacers were placed at three edges of said fabric at both side and were interconnected through the guide pin and the pin hole mechanism to form three equidistant hinges. Fourth spacer (11) had one pin lock at the edge and placed at the fourth edge of the said fabric at both side and lock and seal the mould assembly (5). The said spacers (11, 11a) were pre-designed to accommodate the said plates including support, glass and synthetic fabric on atop of it and closely engaged along with plates including support, glass and synthetic fabric through the guide pin and the pin hole mechanism. The said mould assembly was actuated by hydraulic actuation mechanism into the vacuum chamber by applying vacuum pressure 80 mbar and checking leakage as well as removing air. The above-mentioned nano composite liquid system was casted on the hopper of foldable flat base and was allowed to stand for 60 sec to degas said composite liquid system. The said hopper of foldable flat base was converted into accumulator containing said degassed nano composite liquid system. The said degassed nano composite liquid system was charged into said mould assembly from said accumulator through a resin inlet using a control valve. The level of said composite liquid system in a resin outlet was monitored through window and once it reached to the marking level of resin outlet (17), then the flow of said nano composite liquid system into said mould assembly was stopped by using controlling valve (16). The said composite liquid system in the said mould assembly was allowed to gel for complete gelling followed by shutting off the actuation mechanism by releasing vacuum. Chilled air was passed through said mould assembly to reduce heat generated by exothermic reaction followed by removing moulded laminated reinforced glass. The said moulded laminated reinforced glass was tested for Compressive strength, Transmittance in visible light I/I⁰ (a.u), Surface Indolence (±mm), Drop Impact (50 gm) At 6 m (20 ft) height level at 10 sites and Air bubble. The results of the same were tabulated in Table 5.

### Example 36

### A moulded laminated reinforced composite glass - P2

A moulded laminated reinforced composite glass product **P2** having a cross section 20 x 1000 of length 1500 mm was developed by following the procedure as well as nano composite liquid system of example 35 except vacuum pressure used is 120 mbar instead of 80 mbar. Compressive strength, Transmittance in visible light I/I⁰ (a.u), Surface Indolence (±mm), Drop Impact (50 gm) At 6 m (20 ft) height level at 10 sites and Air bubble were checked and observations were tabulated in Table 5.

### Example 37

### A moulded laminated reinforced composite glass - P3

A moulded laminated reinforced composite glass product **P3** having a cross section 20 x 1000 of length 1500 mm was developed by following the procedure as well as nano composite liquid system of example 35 except vacuum pressure used is 200 Mbar instead of 80 Mbar. Compressive strength, Transmittance in visible light I/I⁰ (a.u), Surface Indolence (±mm), Drop Impact (50 GM) At 20 Ft. height level at 10 sites and air bubble were checked and observations were tabulated in Table 5.

**Table 5: Properties of moulded laminated reinforced composite glass products - P1 to P3**

| | | | | | | |
|---|---|---|---|---|---|---|
| • **Glass used:** 3 mm of Ordinary glass treated with amino isopropyl ethoxy silane (AIES) | | | | | | |
| • **Synthetic fabric used :** E-Glass Fabrics of 80 GSM | | | | | | |
| • **Nano composite:** 100 phr of polyester + 2% of cobalt octoate + 1.5% of Methyl Ethyl Ketone peroxide (MEKP) + 0.1% of Carbon Nano tube + 0.3% of Nano Clay + 5% of Epoxy resin + 3% of Vinyl Acetate. | | | | | | |

| **Products** | **Vacuum Level Mbar** | **Compressive Strength** | **Transmittance in visible light I/I⁰ (a.u)** | **Surface indolence +/- mm** | **Drop Impact (50GM) At 20 ft Height level at 10 sites Damage quantification** | **Air Bubble** |
|---|---|---|---|---|---|---|
| P1 | 80 | 70 | 89 | +/-1.05 | 2 au | Blister free |
| P2 | 120 | 73 | 90 | +/-1.02 | 1.5 au | Blister free |
| P3 | 200 | 80 | 92 | +/-0.5 | 1 au | Blister free |

According to Table 5, P2 and P3 has shown excellent results and P1 has shown satisfactory results.

The cured moulded laminated reinforced composite glass was tested for density, glass to resin bond strength, tensile, drop impact and flexural properties. These tests showed that the composites glass possessed good physical and mechanical properties. The new composite glass has applications in windshields, windows and other components where a strong, lightweight transparent material is desirable. The moulded laminated reinforced composite glass will also have potential applications as backing material in transparent armour systems. The cured composite glass is low density product as compared to normal glass. Also, the laminated composite glass of the invention has improved glass to resin bond strength which helps to hold the glass fragments upon breakage. The laminated composite glass has excellent weather ability or environment resistance and has excellent laceration property as compared to normal composites glass. Thus the present invention provided a moulded laminated reinforced composite glass which is very durable, higher mechanical properties compared to conventional glass and heat insulative yet very light in weight. The present invention also provides a process of producing the same in very simple and economic manner by using very less expensive glass as a starting material and various easily available resins. The present invention has achieved the superior traits of the final product of the present invention as compared to conventional products based on the following:
1. Vacuum assisted resin discharge;
2. Low GSM glass fabrics;
3. Pretension of fabrics increases the compressive load bearing of glass;
4. Higher GSM fabrics reduces the transparency;
5. Higher GSM fabrics increases the tensile and flexural strength;
6. Low heat generation and slow curing is desirable;
7. Higher vacuum reduces the bubble formation; and
8. Resin discharge under gravity, low degree of inclination facilitates low heat generation and formation of micro air bubbles.

The invention is defined by the scope of the appended claims.

## Claims

1. A moulded laminated reinforced composite glass comprising
nano composite comprising polyester resin, curing system comprising 2 % (by wt. of the resin) cobalt octoate and 1.5% % (by wt. of the resin) methyl ethyl ketone peroxide, nano particles comprising 0.1 % (by wt. of the resin) carbon nanotubes and 0.3 % (by wt. of the resin) nano clay, and extenders comprising 5 % (by wt. of the resin) epoxy and 3 % (by wt. of the resin) vinyl acetate,
the nano composite having a cross section of 20 x 1000 x 1500 mm,
wherein the moulded laminated reinforced composite glass further comprises two float glass sheets having equal thickness of 3 mm,
wherein said glass sheets are surface treated with amino isopropyl ethoxy silane (AIES); and
wherein the moulded laminated reinforced composite glass includes a bidirectional or a unidirectionally pre-stretched fabric with weight selected from one of 80, 120, 180 and 200 grams per square metre (GSM) wherein :
a) the pre-stretched fabric having weight 80 grams per square metre (GSM), is selected from bi-directionally pre-tensioned E-glass fabric and bi-directionally pre-tensioned synthetic Basalt fabric; or
b) the pre-stretched fabric having weight 120 grams per square metre (GSM), is selected from bi-directionally pre-tensioned E-glass fabric and bi-directionally pre-tensioned synthetic Basalt fabric; or
c) the pre-stretched fabric having weight 180 grams per square metre (GSM), is selected from bi-directionally pre-tensioned synthetic polyester fabric; or
d) the pre-stretched fabric having weight 200 grams per square metre (GSM), is selected from bi-directionally pre-tensioned E-glass fabric, pre-tensioned synthetic Unidirectional-glass fabric, bi-directionally pre-tensioned synthetic Basalt fabric, and bi-directionally pre-tensioned synthetic polyester fabric.

2. A moulded laminated reinforced composite glass comprising
nano composite comprising polyester resin, curing system comprising 2 % (by wt. of the resin) cobalt octoate and 1.5% % (by wt. of the resin) methyl ethyl ketone peroxide, nano particles comprising 0.1 % (by wt. of the resin) carbon nanotubes and 0.3 % (by wt. of the resin) nano clay, and extenders comprising 5 % (by wt. of the resin) epoxy and 3 % (by wt. of the resin) vinyl acetate,
wherein the moulded laminated reinforced composite glass comprising nano composite of cross section 8 x 1000 x 1000 mm further comprises two float glass sheets having equal thickness of either 1.5 mm or 3 mm; and
wherein 3 mm glass sheets are surface treated with amino isopropyl ethoxy silane (AIES).

## Patentansprüche

1. Geformtes laminiertes verstärktes Verbundglas, umfassend
Nanoverbund, umfassend Polyesterharz, ein Härtungssystem, umfassend 2 % (bezogen auf das Gewicht des Harzes) Kobaltoctoat und 1,5 % (bezogen auf das Gewicht des Harzes) Methylethylketonperoxid, Nanopartikel, umfassend 0,1 % (bezogen auf das Gewicht des Harzes) Kohlenstoffnanoröhrchen und 0,3 % (bezogen auf das Gewicht des Harzes) Nanoton, und Streckungsmittel, umfassend 5 % (bezogen auf das Gewicht des Harzes) Epoxy und 3 % (bezogen auf das Gewicht des Harzes) Vinylacetat, wobei der Nanoverbund einen Querschnitt von 20 x 1000 x 1500 mm hat,
wobei das geformte laminierte verstärkte Verbundglas des Weiteren zwei Floatglasscheiben mit gleicher Dicke von 3 mm umfasst,
wobei die Glasscheiben mit Aminoisopropylethoxysilan (AIES) oberflächenbehandelt sind; und
wobei das geformte laminierte verstärkte Verbundglas ein bidirektionales oder ein unidirektional vorgerecktes Textil mit einem Gewicht ausgewählt aus einem von 80, 120, 180 und 200 Gramm pro Quadratmeter (GSM) einschließt, wobei:
a) das vorgereckte Textil mit einem Gewicht von 80 Gramm pro Quadratmeter (GSM) ausgewählt ist aus bidirektional vorgespanntem E-Glastextil und bidirektional vorgespanntem synthetischem Basalttextil; oder
b) das vorgereckte Textil mit einem Gewicht von 120 Gramm pro Quadratmeter (GSM) ausgewählt ist aus bidirektional vorgespanntem E-Glastextil und bidirektional vorgespanntem synthetischem Basalttextil; oder
c) das vorgereckte Textil mit einem Gewicht von 180 Gramm pro Quadratmeter (GSM) ausgewählt ist aus bidirektional vorgespanntem synthetischem Polyestertextil; oder
d) das vorgereckte Textil mit einem Gewicht von 200 Gramm pro Quadratmeter (GSM) ausgewählt ist aus bidirektional vorgespanntem E-Glastextil, vorgespanntem synthetischem unidirektionalem Glastextil, bidirektional vorgespanntem synthetischem Basalttextil und bidirektional vorgespanntem synthetischem Polyestertextil.

2. Geformtes laminiertes verstärktes Verbundglas, umfassend
Nanoverbund, umfassend Polyesterharz, ein Härtungssystem, umfassend 2 % (bezogen auf das Gewicht des Harzes) Kobaltoctoat und 1,5 % (bezogen auf das Gewicht des Harzes) Methylethylketonperoxid, Nanopartikel, umfassend 0,1 % (bezogen auf das Gewicht des Harzes) Kohlenstoffnanoröhrchen und 0,3 % (bezogen auf das Gewicht des Harzes) Nanoton, und Streckungsmittel, umfassend 5 % (bezogen auf das Gewicht des Harzes) Epoxy und 3 % (bezogen auf das Gewicht des Harzes) Vinylacetat, wobei das geformte laminierte verstärkte Verbundglas, das Nanoverbund mit einem Querschnitt von 8 x 1000 x 1000 mm umfasst, des Weiteren zwei Floatglasscheiben mit gleicher Dicke von entweder 1,5 mm oder 3 mm umfasst;
wobei die 3 mm-Glasscheiben mit Aminoisopropylethoxysilan (AIES) oberflächenbehandelt sind.

## Revendications

1. Verre composite renforcé stratifié moulé comprenant un nanocomposite comprenant une résine de polyester, un système de durcissement comprenant 2 % (en poids de la résine) d'octoate de cobalt et 1,5 % (en poids de la résine) de peroxyde de méthyléthylcétone, des nanoparticules comprenant 0,1 % (en poids de la résine) de nanotubes de carbone et 0,3 % (en poids de la résine) d'une nanoargile, et des agents d'allongement comprenant 5 % (en poids de la résine) d'époxy et 3 % (en poids de la résine) d'acétate de vinyle,
le nanocomposite ayant une section transversale 20 x 1 000 x 1 500 mm,
le verre composite renforcé stratifié moulé comprenant en outre deux feuilles de verre flotté ayant une épaisseur égale de 3 mm,
lesdites feuilles de verre étant traitées en surface par de l'aminoisopropyléthoxysilane (AIES) ; et
le verre composite renforcé stratifié moulé comprenant un tissu pré-étiré bidirectionnel ou un tissu pré-étiré de manière unidirectionnelle doté d'un poids choisi parmi l'un parmi 80, 120, 180 et 200 grammes par mètre carré (GSM) :
a) le tissu pré-étiré ayant 80 grammes par mètre carré (GSM), étant choisi parmi un tissu de verre E précontraint de manière bidirectionnelle et un tissu de basalte synthétique précontraint de manière bidirectionnelle ; ou
b) le tissu pré-étiré ayant 120 grammes par mètre carré (GSM), étant choisi parmi un tissu de verre E précontraint de manière bidirectionnelle et un tissu de basalte synthétique précontraint de manière bidirectionnelle ; ou
c) le tissu pré-étiré ayant 180 grammes par mètre carré (GSM), étant choisi parmi un tissu de polyester synthétique précontraint de manière bidirectionnelle ; ou
d) le tissu pré-étiré ayant 200 grammes par mètre carré (GSM), étant choisi parmi un tissu de verre E précontraint de manière bidirectionnelle, un tissu de verre unidirectionnel synthétique précontraint, un tissu de basalte synthétique précontraint de manière bidirectionnelle et un tissu de polyester synthétique précontraint de manière bidirectionnelle.

2. Verre composite renforcé stratifié moulé comprenant un nanocomposite comprenant une résine de polyester, un système de durcissement comprenant 2 % (en poids de la résine) d'octoate de cobalt et 1,5 % (en poids de la résine) de peroxyde de méthyléthylcétone, des nanoparticules comprenant 0,1 % (en poids de la résine) de nanotubes de carbone et 0,3 % (en poids de la résine) d'une nanoargile, et des agents d'allongement comprenant 5 % (en poids de la résine) d'époxy et 3 % (en poids de la résine) d'acétate de vinyle,
le verre composite renforcé stratifié moulé comprenant un nanocomposite de section transversale 8 x 1 000 x 1 000 mm comprenant en outre deux feuilles de verre flotté ayant une épaisseur égale soit de 1,5 mm, soit de 3 mm ;
des feuilles de verre de 3 mm étant traitées en surface par de l'aminoisopropyléthoxysilane (AIES).
